**Europäisches Patentamt**

**European Patent Office**

**Office européen des brevets**

(11) Veröffentlichungsnummer: **0 236 661**
**A1**

# (12) EUROPÄISCHE PATENTANMELDUNG

(21) Anmeldenummer: 86890053.1

(22) Anmeldetag: 11.03.86

(51) Int. Cl.4: **B23Q 7/04**

(43) Veröffentlichungstag der Anmeldung:
16.09.87 Patentblatt 87/38

(84) Benannte Vertragsstaaten:
**AT DE FR GB IT**

(71) Anmelder: **GFM Gesellschaft für Fertigungstechnik und Maschinenbau Gesellschaft m.b.H.**
**Ennserstrasse 14**
**A-4403 Steyr(AT)**

(72) Erfinder: **Blaimschein, Gottfried, Dipl.-Ing.**
**Arnhalmweg 33**
**A-4407 Steyr(AT)**

(74) Vertreter: **Hübscher, Gerhard, Dipl.-Ing. et al**
**Patentanwälte Dipl.-Ing. Gerhard Hübscher Dipl.-Ing. Helmut Hübscher Dipl.-Ing. Heiner Hübscher Spittelwiese 7**
**A-4020 Linz(AT)**

(54) **Kurbelwellenfräsmaschine od.dgl.**

(57) Eine Kurbelwellenfräsmaschine weist ein Maschinenbett (1), wenigstens ein ringförmiges, innenschneidendes Werkzeug (4) und zwei das Werkstück (W) endseitig spannende, in Werkzeugachsrichtung verschiebbare Spannstöcke (5, 6) auf.

Um einen rationellen Werkstückwechsel ohne große Nebenzeitverluste zu erreichen, sind beide Spannstöcke (5, 6) aus ihrer Arbeitsstellung mit an die Werkstücklänge angepaßtem gegenseitigem Abstand in eine Wechselstellung mit einem auf mindestens die doppelte Werkstücklänge abgestimmten gegenseitigen Abstand zurückfahrbar, welche beiderseits des Werkzeuges (4) liegenden Wechselstellungen einerseits zum Einsetzen eines zu bearbeitenden Werkstückes (W) in den einen Spannstock (5), den Beladespannstock, und anderseits zum Abnehmen eines bearbeiteten Werkstückes (W) vom anderen Spannstock (6), dem Entladespannstock, dienen. Der Beladespannstock (5) führt dabei das Werkstück (W) beim Vorfahren in die Arbeitsstellung frei vorkragend axial durch das Werkzeug (4), in der Arbeitsstellung spannen beide Spannstöcke (5, 6) das Werkstück (W) endseitig und nach der Bearbeitung zieht der Entladespannstock (6) das vom Belade-spannstock (5) übernommene Werkstück (W) beim Zurückfahren in die Wechselstellung frei vorkragend axial aus dem Werkzeug (4) heraus.

FIG.1

## Kurbelwellenfräsmaschine od. dgl.

Die Erfindung bezieht sich auf eine Kurbelwellenfräsmaschine od. dgl., mit einem Maschinenbett, wenigstens einem ringförmigen, innenschneidenden Werkzeug und zwei das Werkstück endseitig spannenden, in Werkzeugachsrichtung verschiebbaren Spannstöcken.

Diese Fräsmaschinen mit Innenfräsern eignen sich vor allem zur Bearbeitung von Kurbelwellen oder anderen wellenförmigen Werkstücken und haben sich wegen der erreichbaren kurzen Bearbeitungszeiten und hohen Bearbeitungsgenauigkeiten bestens bewährt. Aufgrund des ringförmigen, das Werkstück umschließenden Werkzeuges verlangt allerdings der Werkstückwechsel besondere Maßnahmen, wobei bisher die Werkzeuge in einer Relativbewegung zu den Spannstöcken über die entsprechend weit vorkragenden Spannfutter gefahren werden, um den Platz zwischen den beiden Spannfuttern für das Einsetzen bzw. Abnehmen der Werkstücke freizumaschen. Dazu ist es notwendig, die Ausladung der Spannfutter auf die zu überbrückende Gesamtbreite der Fräswerkzeuge abzustimmen und die Durchmesser der ganzen Werkstückaufnahmeeinrichtungen an den Innenkreis der Werkzeuge anzupassen, was zu einer wenig stabilen Werkstückhalterung führt und Platzprobleme für die Konstruktion dieser Werkzeugaufnahmeeinrichtungen mit sich bringt.

Um den Werkstückwechsel zu rationalisieren, wurde gemäß der EP 0 166 845 A1 bereits vorgeschlagen, einen der Spannstöcke als Ladespannstock zu verwenden und mit Hilfe dieses entsprechend weit in Werkzeugachsrichtung verschiebbaren Spannstockes die Werkstücke axial durch die ringförmigen Werkzeuge hindurchzustecken, womit vorkragende Spannfutter unnötig sind und ohne Platzschwierigkeiten für einen stabile Werkstückhalterung gesorgt werden kann. Die bekannten Ladenspannstöcke dienen aber sowohl zum Beladen der Maschine als auch zum Entladen, da sie die rohren Werkstücke in die Fräswerkzeuge einführen und die fertigen Werkstücke aus den Fräswerkzeugen wieder herausziehen müssen, so daß beim Werkstückwechsel mit dem Einsetzen des neuen Werkstückes in den Ladespannstock erst dann begonnen werden kann, wenn das fertige Werkstück abgenommen ist. Die Nebenzeiten beim Werkstückwechsel sind daher relative hoch und machen sich gerade bei Serienproduktionen in Summe unangenehm bemerkbar.

Der Erfindung liegt daher die Aufgabe zugrunde, dieses Mängel zu beseitigen und eine Kurbelwellenfräsmaschine der eingangs geschilderten Art so zu verbessern, daß vor allem ein rationeller Werkstückwechsel gewährleistet ist der ohne Einschränkungen für die Stabilität der Werkstückhalterung eine beträchtliche Nebenzeiteinsparung mit sich bringt.

Die Erfindung löst diese Aufgabe dadurch, daß beide Spannstöcke aus ihrer Arbeitsstellung mit an die Werkstücklänge angepaßtem gegenseitigem Abstand in eine Wechselstellung mit einem auf mindestens die doppelte Werkstücklänge abgestimmten gegenseitigen Abstand zurückfahrbar sind, welche beiderseits des Werkzeuges liegenden Wechselstellungen einerseits zum Einsetzen eines zu bearbeitenden Werkstückes in den einen Spannstock, den Beladespannstock, und anderseits zum Abnehmen eines bearbeiteten Werkstückes vom anderen Spannstock, dem Entladespannstock, dienen, wobei der Beladespannstock das aufgenommene, einerends spannende Werkstück beim Vorfahren aus der Wechselstellung in die Arbeitsstellung frei vorkragend axial durch das Werkzeug hindurchführt und dem ebenfalls in die Arbeitsstellung vorgefahrenen Entladespannstock zum beiderendigen Spannen des Werkstückes während der Bearbeitung zubringt und der Entladespannstock nach der Bearbeitung das anderends spannende, vom Beladespannstock übernommene Werkstück beim Zurückfahren aus der Arbeitsstellung in die Wechselstellung frei vorkragend axial aus dem Werkzeug herauszieht und zur Abnahme bereithält. Durch diese Aufgabenteilung beim Werkstückwechsel braucht der Beladespannstock nur die neu zu bearbeitenden Werkstücke in das Werkzeug einzuführen und es zusammen mit dem Entladespannstock während der Bearbeitung zu spannen, übergibt es aber dann dem Entladespannstock, der es seinerseits aus dem Werkzeug herauszieht und als fertig bearbeitetes Werkstück abgibt. Gleichzeitig mit der Abnahme des fertig bearbeiteten Werkstückes kann daher der leer in die Wechselstellung zurückgefahrene Beladespannstock neu bestückt werden. In der Zeit des Einsatzes eines neuen Werkstückes in den Beladespannstock ist auch das fertig bearbeitete Werkstück dem Entladespannstock entnommen, der nun leer in die Arbeitsstellung vorfährt und zum Spannen bzw. Übernehmen des vom Beladespannstock angebrachten nächsten Werkstückes bereit ist. Der Werkstückwechsel wird durch den parallelen Ablauf des Be-und Entladens wesentlich vereinfacht und beschleunigt und die ganze Ladezeit der Fräsmaschine läßt sich bis etwa auf ein Drittel der bisherigen Ladezeit verkürzen.

Gemäß einer besonders vorteilhaften Ausgestaltung der Erfindung gibt es zwei nebeneinander angeordnete Maschineneinheiten, wobei der Entladespannstock der einen Einheit dem Beladespannstock der anderen Einheit benachbart ist. Bedarf die Bearbeitung der Werkstücke zweier Arbeitsschritte, so kann der erste Arbeitsschritt auf der einen und der zweite Arbeitsschritt auf der anderen Maschineneinheit durchgeführt werden, und die auf der ersten Einheit vorbearbeiteten Stücke können unmittelbar vom Entladespannstock dieser Maschineneinheit dem Beladespannstock der anderen Maschineneinheit übergeben werden, was größere Transportowege und -zeiten erübrigt und den Bearbeitungsablauf weitere rationalisiert.

Sind erfindungsgemäß die eine Maschineneinheit auf die Bearbeitung der Lagerzapfen und die andere auf die Bearbeitung der Hubzapfen einer Kurbelwelle abgestimmt, entsteht eine besonders wirtschaftliche Möglichkeit der Kurbelwellenserienfertigung.

Eine Vereinfachung der Maschinekonzeption wird er reicht, wenn für beide Maschineneinheiten eine gemeinsame Steuerungseinrichtung vorgesehen ist, so daß auf zweckmäßigeWeise die komplizierten Steuerungseinrichtungen einer Maschine für beide Maschineneinheiten nutzbar sind und die Funktionen der Maschineneinheiten exakt aufeinander abgestimmt werden können.

In der Zeichnung ist der Erfindungsgegenstand beispielsweise dargestellt, und zwar zeigen die

Fig. 1 und 2 eine erfindungsgemäße Fräsmaschine in Arbeitsstellung bzw. in Wechsellstellung anhand einer Voransicht und

Fig. 3 eine andere erfindungsgemäße Fräsmaschine in schematischer Draufsicht kleineren Maßstabes.

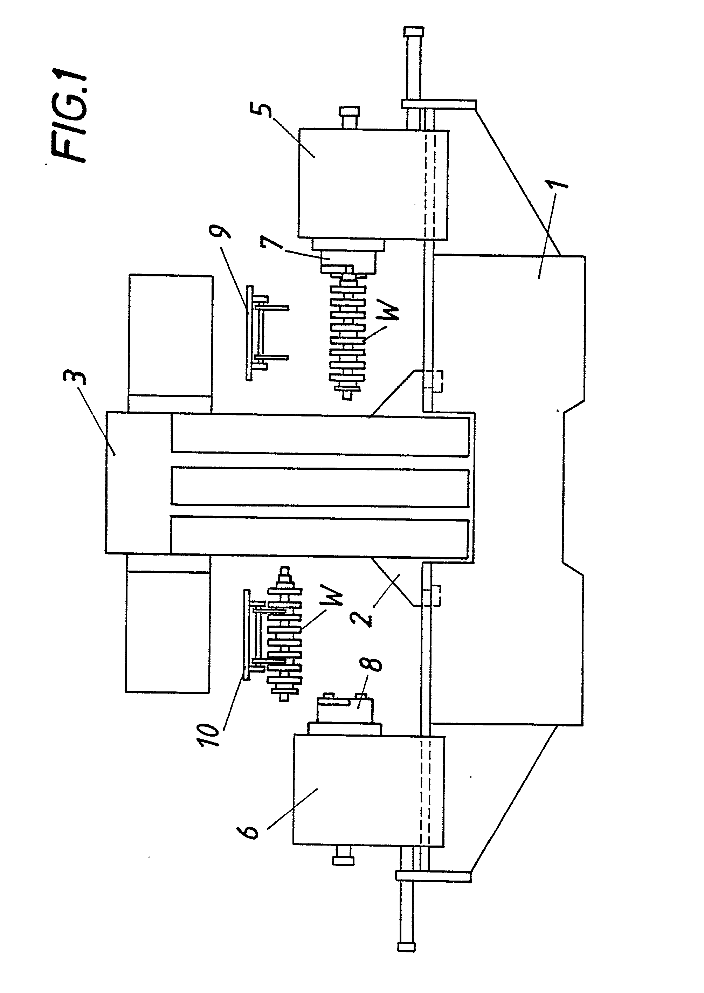

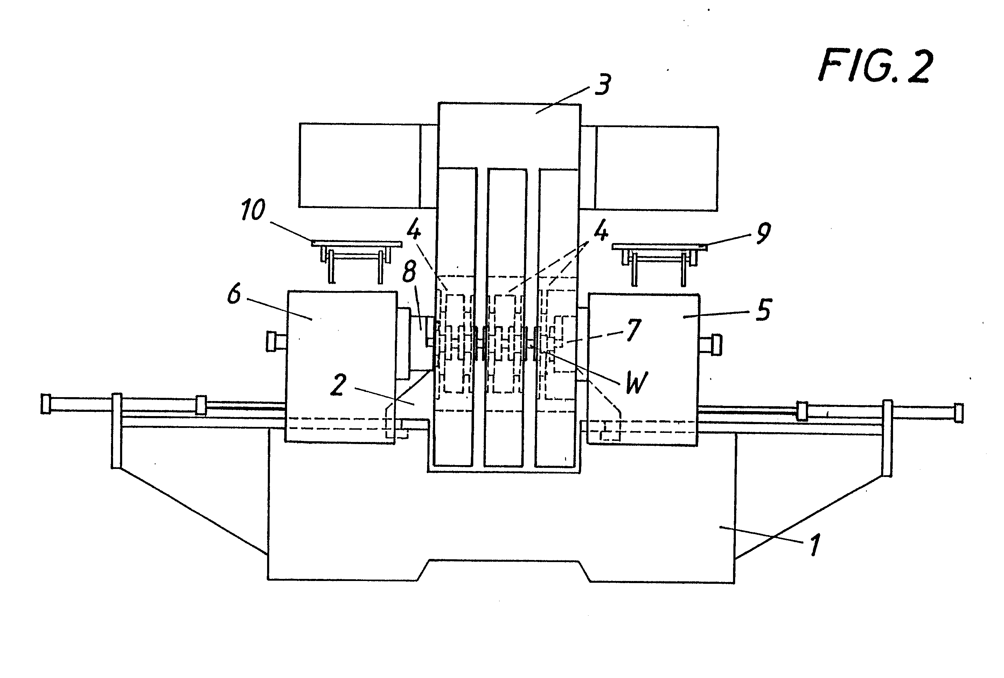

Auf einem Maschinenbett 1 sitzt ein Werkzeugschlitten 2, der ein Fräsaggregat 3 mit ringförmigen, innenschneidenden Werkzeugen 4 aufnimmt. Beidseitig des Werkzeugschlittens 2 sind zwei Spannstöcke 5, 6 für das Werkstück W längsverschiebbar angeordnet, welche Spannstöcke aus ihrer Arbeitsstellung, in der sie das Werkstück W beiderends spannen (Fig. 2), in eine Wechselstellung zum Be-und Entladen neben dem Fräsaggregat 3 zurückfahren können (Fig. 1). Da durch die Verwendung des einen Spannstockes 5 als Beladespannstock und des anderen Spannstockes 6 als Entladespannstock bei einen Werkstückwechsel das Einsetzen eines neu zu bearbeitenden Werkstückes gleichzeitig mit dem Abnehmen des gerade fertig bearbeiteten Werkstückes möglich ist, ergibt sich ein rationeller Werkstückwechsel mit beträchtlichen Nebenzeiteinsparungen.

Für den Werkstückwechsel befinden sich beide Spannstöcke 5, 6 in ihrer Wechselstellung (Fig. 1), in der einerseits ein zu bearbeitendes Werkstück W in das Spannfutter 7 des Beladespannstockes 5 eingesetzt und anderseits das fertige Werkstück dem Spannfutter 8 des Entladespannstockes 6 entnommen wird, wozu geeignete Be-und Entladeeinrichtungen 9, 10 vorgesehen sind. Nun fahren beide Spannstöcke, der leere Entladespannstock 6 und der das Werkstück W frei vorkragend an einem Ende spannende Beladespannstock 5 vorwärts in ihre Arbeitsstellung, wobei der Beladespannstock 5 das Werkstück W axial durch die Werkzeuge 4 hindurch-und mit dem freien Ende in das offene Spannfutter 8 des entgegenkommenden Entladespannstockes 6 einführt, so daß in der Arbeitsstellung (Fig. 2) das zu bearbeitende Werkstück W die ringförmigen Werkzeuge 4 durchragt und beiderends von den Spannfuttern 7, 8 der Spannstöcke 5, 6 festgespannt werden kann. Nach der Bearbeitung öffnet das Spannfutter 7 des Beladespannstockes 5 und übergibt daher das bearbeitete Werkstück dem das andere Werkstückende weiter spannenden Spannfutter 8 des Entladespannstockes 6. Nun fahren beide Spannstöcke, der leere Beladespannstock 5 und der das fertige Werkstück W nun seinerseites frei vorkragend spannende Entladespannstock 6, zurück in ihre Wechselstellung, wobei der Entladespannstock 6 das Werkstück W axial aus dem Spannfutter 7 des sich entfernenden Beladespannstockes 5 und aus den Werkzeugen 4 herauszieht und für eine Abnahme bereithält. Während einer solchen Abnahme läßt sich dann gleichzeitig ein neues Werkstück wieder in das Spannfutter 7 des Beladespannstocken 5 einsetzen und für den Ladevorgang vorbereiten (Fig. 1).

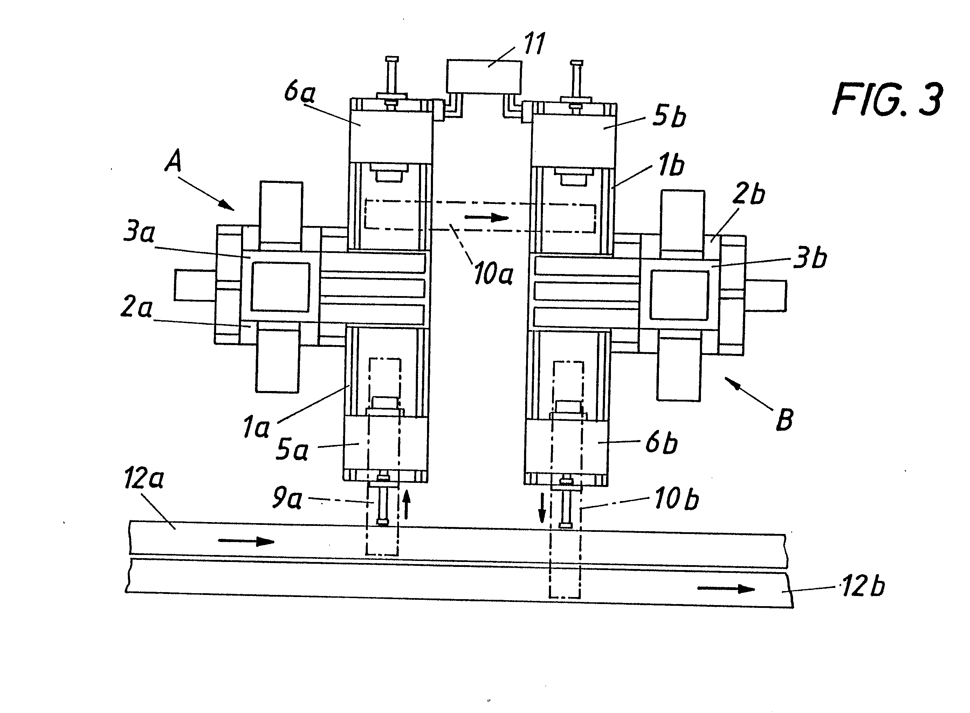

Die Trennung des Be-und Entladevorganges beim Werkstückwechsel und die jeweilige Zuordnung eines Spannstockes zu den einzelnen Ladevorgängen erlauben eine für Serienfertigungen besonders zweckmäßige Maschinenkonzeption. Wie in Fig. 3 angedeutet, können so zwei Maschineneinheiten A,B nebeneinander angeordnet werden, wobei der Entladespannstock 6a der einen Einheit A dem Beladespannstock 5b der anderen Einheit B benachbart ist, was eine unmittelbare Übergabe des auf der Maschineneinheit A bearbeiteten Werkstückes auf die Maschineneinheit B zur Weiterbearbeitung ermöglicht. Jede Maschineneinheit A, B besitzt ihr Maschinenbett 1a, 1b, ihren Werkzeugschlitten 2a, 2b mit dem Fräsaggregat 3a, 3b und die als Be-und Entladespannstöcke dienenden, aus den Arbeitsstellungen in die Wechselstellungen verfahrbaren Spannstöcke 5a, 6a, 5b, 6b, zur Steuerung und Überwachung der Maschine ist aber eine gemeinsame Steuerungseinrichtung 11 für beide Maschineneinheiten A, B vorgesehen, was nicht nur die steuerungstechnische Abstimmung der beiden Maschineneinheiten aufeinander erleichtert, sondern auch den Bau-und Herstellungsaufwand verringert. Mit dieser Fräsmaschine können nun auf rationelle Weise Kurbelwellen od. dgl. Werkstücke rationellst bearbeitet werden, da sie der Reihe nach von einem seitlichen Zubringer 12a mittels einer Beladeeinrichtung 9a in den Beladespannstock 5a der ersten Maschineneinheit A eingesetzt werden können, auf welcher Maschineneinheit beispielsweise die Lagerzapfen der Kurbelwellen mit dem Fräsaggregat 3a bearbeitbar sind, dann die teilweise bearbeiteten Werkstücke vom Entladespannstock 6a mittels einer Übergabeeinrichtung 10a, die für den Entladespannstock 6a Entlade-und für den Beladespannstock 5b Beladeeinrichtung ist, abgenommen und in den Beladespannstock 5b der anderen Maschineneinheit B eingesetzt werden, auf welcher Maschineneinheit B dann die Hubzapfen der Kurbelwellen mit dem Fräsaggregat 3b bearbeitbar sind. Dem Entladespannstock 6b der Maschineneinheit B können dann die an den Hub-und Lagerzapfen fertig bearbeiteten Werkstücke mittels der Entladeeinrichtung 10b abgenommen und auf einen geeigneten Förderer 12 b zum Abtransport abgelegt werden. Es ist eine schnelle, übersichtliche und auch funktionssichere Kurbelwellenfertigung gewährleistet.

## Ansprüche

1. Kurbelwellenfräsmaschine od. dgl., mit einem Maschinenbett (1), wenigstens einem ringförmigen, innenschneidenden Werkzeug (4) und zwei das Werkstück (W) endseitig spannenden, in Werkzeugachsrichtung verschiebbaren Spannstöcken (5, 6), dadurch gekennzeichnet, daß beide Spannstöcke (5, 6) aus ihrer Arbeitsstellung mit an die Werkstücklänge angepaßtem gegenseitigem Abstand in eine Wechselstellung mit einem auf mindestens die doppelte Werkstücklänge abgestimmten gegenseitigen Abstand zurückfahrbar sind, welche beiderseits des Werkzeuges (4) liegenden Wechselstellungen einerseits zum Einsetzen eines zu bearbeitenden Werkstückes (W) in den einen Spannstock (5), den Beladespannstock, und anderseits zum Abnehmen eines bearbeiteten Werkstückes (W) vom anderen Spannstock (6), dem Entladespannstock, dienen, wobei der Beladespannstock (5) das aufgenommene, einerends spannende Werkstück (W) beim Vorfahren aus der Wechselstellung in die Arbeitsstellung frei vorkragend axial durch das Werkzeug (4) hindurchführt und dem ebenfalls in die Arbeitsstellung vorgefahrenen Entladespannstock (6) zum beiderendigen Spannen des Werkstückes während der Bearbeitung zubringt und der Entladespannstock (6) nach der Bearbeitung das andernends spannende, vom Beladespannstock (5) übernommene Werkstück beim Zurückfahren aus der Arbeitsstellung in die Wechselstellung frei vorkragend axial aus dem Werkzeug (4) herauszieht und zur Abnahme bereithält.

2. Fräsmaschine nach Anspruch 1, gekennzeichnet durch zwei nebeneinander angeordnete Maschineneinheiten (A,B), wobei der Entladespannstock (6a) der einen Einheit (A) dem Beladespannstock (5b) der anderen Einheit (B) benachbart ist.

3. Fräsmaschine nach Anspruch 2, dadurch gekennzeichnet, daß die eine Maschineneinheit (A) auf die Bearbeitung der Lagerzapfen und die andere (B) auf die Bearbeitung der Hubzapfen einer Kurbelwelle (W) abgestimmt sind.

4. Fräsmaschine nach Anspruch 2 oder 3, dadurch gekennzeichnet, daß für beide Maschineneinheiten (A, B) eine gemeinsame Steuerungseinrichtung (11) vorgesehen ist.

FIG.1

0 236 661

FIG.2

0 236 661

FIG. 3

0 236 661

Europäisches
Patentamt

# EUROPÄISCHER RECHERCHENBERICHT

Nummer der Anmeldung

EP  86 89 0053

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-2 623 429   (MEYER) <br> --- | 1 | B 23 Q   7/04 |
| A | EP-A-0 056 204   (RAMO) | | |
| | ----- | | |

RECHERCHIERTE
SACHGEBIETE (Int. Cl.4)

B 23 Q   7/00
B 23 C   3/00

Der vorliegende Recherchenbericht wurde für alle Patentansprüche erstellt.

| Recherchenort | Abschlußdatum der Recherche | Prüfer |
|---|---|---|
| DEN HAAG | 11-11-1986 | BOGAERT F.L. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82